# EUROPEAN PATENT APPLICATION

(11) **EP 2 623 325 A1**
(43) Date of publication of application: **07.08.2013**
(21) Application number: 11828576.6
(22) Date of filing: 14.07.2011
(51) Int. Cl.: B41J 2/32, G03B 35/00

(54) **IMAGE-FORMING DEVICE AND IMAGE-FORMING METHOD**

(30) Priority: 30.09.2010 JP 2010222561
(71) Applicant: FUJIFILM Corporation, Tokyo 106-8620 (JP)
(72) Inventor: MAYUMI, Kazuya, Saitama-shi Saitama 331-9624 (JP); IMAI, Ryo, Saitama-shi Saitama 331-9624 (JP); YOSHIDA, Naoki, Tokyo 170-0005 (JP)
(74) Representative: HOFFMANN EITLE
(86) International application number: PCT/JP2011/066042
(87) International publication number: WO 2012/043015

(57) **Abstract**

Provided is an image forming device including: a conveyance unit conveying a lenticular sheet in a secondary scanning direction, the lenticular sheet formed by plural lenticular lenses aligned on a surface of the lenticular sheet in the secondary scanning direction; plural detecting sensors disposed on a conveyance track of the lenticular sheet, the plural detecting sensors including a first detecting sensor and a second detecting sensor that are disposed on a base line in a primary scanning direction vertical to the secondary scanning direction; a lens tilt calculating unit calculating a tilt angle of each of the lenticular lenses relative to the base line based on detecting signals of the plural detecting sensors; a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet; a storage unit storing a tilt angle in a longitudinal direction of the head relative to the base line; and a tilt correction controller for adjusting the tilt angle of each of the lenticular lenses and the tilt angle of the head to agree with each other based on the tilt angle of each of the lenticular lenses calculated on the lent tilt calculating unit and the tilt angle of the head stored on the storage unit.

## Description

### {Technical Field}

The present invention relates to an image forming device and an image forming method capable of forming a 3D image with high accuracy by adjusting a longitudinal direction of each lenticular lens and a longitudinal direction of linear images constituting the 3D image to agree with each other.

### {Background Art}

There have been known image forming devices each of which prints plural viewpoint images on a lenticular sheet made of substantially semi-cylindrical lenticular lenses aligned in plural, so as to form a 3D image. Specifically, the lenticular sheet is conveyed, and a linear image of each viewpoint image is printed on each lenticular lens on a back surface of the lenticular sheet by using a line head. For example, in the case of printing six viewpoint images, six linear images are printed on each lenticular lens.

In order to enhance quality of the 3D image in such an image formation, it is required to accurately position each lenticular lens to the linear image constituting each viewpoint image.

PTL 1 discloses that a test pattern is printed, and thereafter this test pattern is read by a photo sensor, so as to detect a distance from a printing position to a position where the photo sensor reads the test pattern.

PTL 2 discloses that an optical sensor provided for a head detects a relative position of each lenticular lens to the head.

PTL 3 discloses that a lenticular sheet is read, so as to calculate a tilt of a valley portion of each lenticular lens (convex lens) relative to a reference horizontal line, thereby calculating a tilt angle of each lenticular lens.

### {Citation List}

{Patent Literature}
{PTL1} Japanese Patent Application Laid-Open No. H08-137034
{PTL2} Japanese Patent Application Laid-Open No. 2003-21.878
{PTL3} Japanese Patent Application Laid-Open No. 2007-127521

### {Summary of Invention}

### {Technical Problem}

In order to form a 3D image with high quality, it is required to precisely position the longitudinal direction of the linear images to be printed to agree with the longitudinal direction of each lenticular lens. Specifically, it is required to precisely detect the respective tilts of each lenticular lens and the head, and adjust the longitudinal direction of each lenticular lens to agree with the longitudinal direction of the linear images based on the detected tilts of the lenticular lens and the head.

In the configuration of PTL 1, only a moving distance from the printing position to the reading position of the photo sensor is detected, and the tilts of each lenticular lens and the head cannot be precisely detected. In the configuration of PTL 2, only the relative position of each lenticular lens to the head is detected, and the tilts of each lenticular lens and the head cannot be precisely detected. In the configuration of PTL 3, it is possible to detect the tilt angle of the lenticular lenses, but a detection error of the tilt angle may be caused if the tilt angle is great relative to each lens pitch. In addition, none of PTL 1 to PTL 3 describes how to correct the tilt of the head.

An object of the present invention, which has been made in order to solve the problems according to the conventional art, is to provide an image forming device and an image forming method capable of forming a 3D image with high quality even if each lenticular lens and the head are inclined.

### {Solution to Problem}

In order to accomplish the above described object, the present invention provides an image forming device including: a conveyance unit conveying a lenticular sheet in a secondary scanning direction, the lenticular sheet formed by plural lenticular lenses aligning on a surface of the lenticular sheet in the secondary scanning direction; plural detecting sensors disposed on a conveyance track of the lenticular sheet, the plural detecting sensors including a first detecting sensor and a second detecting sensor that are disposed on a base line in a primary scanning direction vertical to the secondary scanning direction; a lens tilt calculating unit calculating a tilt angle of each of the lenticular lenses relative to the base line based on detecting signals of the plural detecting sensors; a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet; a storage unit storing a tilt angle in a longitudinal direction of the head relative to the base line; and a tilt correction controller for adjusting the tilt angle of each of the lenticular lenses and the tilt angle of the head to agree with each other based on the tilt angle of each of the lenticular lenses calculated on the lent tilt calculating unit and the tilt angle of the head stored on the storage unit. Specifically, a virtual line between the first detecting sensor and the second detecting sensor is defined as the base line, and such an angle correction is carried out that adjusts the tilt angle of each lenticular lens and the tilt angle of the head to agree with each other, thereby realizing 3D image formation with high accuracy.

In one aspect of the present invention, the image forming device further includes a holding unit holding the lenticular sheet that is conveyed on the conveyance track through the conveyance unit, wherein the tilt correction controller rotates the holding unit around an axis vertical to a conveyance surface of the lenticular sheet, so as to change the tilt angle of each lenticular lens.

In one aspect of the present invention, the image forming device further includes a line tilt measuring unit: conveying a reference sheet having an end face intersecting the secondary scanning direction, the reference sheet on which a line parallel to the end face is formed; detecting the line on the reference sheet on the plural detecting sensors while the reference sheet is being held by the holding unit; and calculating a tilt angle of the line on the reference sheet relative to the base line based on the detecting signals of the plural detecting sensors, wherein the tilt correction controller rotates the holding unit such that the line on the reference sheet becomes parallel to the base line between the first detecting sensor and the second detecting sensor based on the tilt angle of the line on the reference sheet calculated on the line tilt measuring unit.

In one aspect of the present invention, the plural detecting sensors include a third detecting sensor that is allowed to deviate from the base line between the first detecting sensor and the second detecting sensor, the image forming device further includes a sensor position aberration calculating unit calculating position aberration of the third detecting sensor from the base line based on the detecting signals of the plural detecting sensors that have detected the line on the reference sheet, the storage unit stores the position aberration of the third detecting sensor calculated on the sensor position aberration calculating unit, and the lens tilt calculating unit corrects the detecting signal of the third detecting sensor based on the position aberration of the third detecting sensor stored on the storage unit, and calculates the tilt angle of each lenticular lens. Specifically, even if the position of the third detecting sensor deviates from the base line, it is possible to precisely correct the tilt angle of each lenticular lens by measuring the position aberration and correcting the detecting signals, thereby forming the 3D image with high accuracy.

In one aspect of the present invention, the plural viewpoint images are recorded on the lenticular sheet if a peak of the detecting signal of the first detecting sensor is in-phase with a peak of the detecting signal of the second detecting sensor, and if a time difference between the peak of the detecting signals of the first detecting sensor and of the second detecting sensor and a peak of the detecting signal of the third detecting sensor corresponds to the position aberration stored on the storage unit.

In one aspect of the present invention, the image forming device further includes a detecting-pattern printing controller for conveying a detecting sheet through the conveyance unit, and printing a detecting pattern for detecting the tilt angle of the head relative to the base line on the detecting sheet with the head; and a head tilt angle measuring unit detecting the detecting pattern on the plural detecting sensors, calculating a tilt angle of the detecting pattern relative to the base line based on the detected signals of the plural detecting sensors, and storing the calculated tilt angle as the tilt angle of the head on the storage unit.

In one aspect of the present invention, the image forming device further includes a head rotating unit rotating the head around an axis vertical to the conveyance surface of the lenticular sheet, wherein the tilt correction controller rotates the head through the head rotating unit.

In addition, the present invention provides an image forming device including: a conveyance unit conveying a lenticular sheet in a secondary scanning direction, the lenticular sheet formed by plural lenticular lenses aligned on a surface of the lenticular sheet in the secondary scanning direction; plural detecting sensors disposed on a conveyance track of the lenticular sheet, and the plural detecting sensors including a first detecting sensor and a second detecting sensor that are disposed on a base line in a primary scanning direction vertical to the secondary scanning direction; a lens tilt calculating unit calculating a tilt angle of each of the lenticular lenses relative to the base line based on detecting signals of the plural detecting sensors; a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet; a storage unit storing a tilt angle of the head in a longitudinal direction of the head relative to the base line; a holding unit having a bumper against which the lenticular sheet conveyed on the conveyance track through the conveyance unit is pushed, so as to hold the lenticular sheet while the lenticular sheet is being pushed against the bumper; and a tilt correction controller for adjusting the tilt angle of each lenticular lens and the tilt angle of the head to agree with each other based on the tilt angle of the head stored on the storage unit with the bumper of the holding unit parallel to the base line.

In one aspect of the present invention, the image forming device includes a line tilt measuring unit: conveying a reference sheet having an end face intersecting the secondary scanning direction, the reference sheet on which a line parallel to the end face is formed; detecting the line on the reference sheet on the plural detecting sensors while the reference sheet is being pushed against the bumper of the holding unit so as to be held by the holding unit; and calculating a tilt angle of the line on the reference sheet relative to the base line based on the detecting signals of the plural detecting sensors, wherein the tilt correction controller rotates the holding unit such that the line on the reference sheet becomes parallel to the base line between the first detecting sensor and the second detecting sensor based on the tilt angle of the line on the reference sheet calculated on the line tilt measuring unit. Specifically, it is possible to readily obtain the tilt angle of the bumper of the holding unit by defining a virtual line between the first detecting sensor and the second detecting sensor as the base line.

In one aspect of the present invention, the image forming device further includes: a curvature storage unit storing amount of curvature in the longitudinal direction of the head; and an image correcting unit correcting curvature of the viewpoint images formed on the lenticular sheet due to the curvature of the head based on the amount of curvature stored on the storage unit so as to cancel curvature distortion of the viewpoint images.

In one aspect of the present invention, the image forming device further includes: a detecting-pattern printing controller for conveying a detecting sheet through the conveyance unit, and printing a detecting pattern for detecting the tilt angle of the head relative to the base line on the detecting sheet with the head; a head tilt angle measuring unit detecting the detecting pattern on the plural detecting sensors, calculating a tilt angle of the detecting pattern relative to the base line based on the detected signals of the plural detecting sensors, and storing the calculated tilt angle as the tilt angle of the head on the storage unit; and a curvature measuring unit calculating the amount of curvature in the longitudinal direction of the head based on the detecting signals of the plural detecting sensors that have detected the detecting pattern on the detecting sheet, and storing the calculated the amount of curvature on the storage unit.

In one aspect of the present invention, a detecting sensor for detecting the amount of curvature is disposed in a middle position between the first detecting sensor and the second detecting sensor.

In one aspect of the present invention, four or more detecting sensors are disposed as the plural detecting sensors.

In one aspect of the present invention, the plural detecting sensors are arranged in such a manner that at least one distance between two adjacent detecting sensors is different from distances between other two adjacent detecting sensors among the plural detecting sensors.

In addition, the present invention provides an image forming method used for an image forming device including: a conveyance unit conveying a lenticular sheet in a secondary scanning direction, the lenticular sheet formed by plural lenticular lenses aligned on a surface of the lenticular sheet in the secondary scanning direction; plural detecting sensors disposed on a conveyance track of the lenticular sheet, the plural detecting sensors including a first detecting sensor and a second detecting sensor that are disposed on a base line in a primary scanning direction vertical to the secondary scanning direction; a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet; and a storage unit. The image forming method causes the image forming device to execute: a step of storing a tilt angle of the head in a longitudinal direction thereof relative to the base line; a step of calculating a tilt angle of each lenticular lens relative to the base line based on detecting signals of the plural detecting sensors; a step of adjusting the tilt angle of the lenticular lens and the tilt angle of the head to agree with each other based on the calculated tilt angle of each lenticular lens and the tilt angle of the head stored on the storage unit; and a step of recording the plural viewpoint images on a back surface of the lenticular sheet with the head.

### {Advantageous Effects of Invention}

According to the present invention, it is possible to form a 3D image with high quality by adjusting the longitudinal direction of each lenticular lens and the longitudinal direction of the linear images to agree with each other.

### {Brief Description of Drawings}

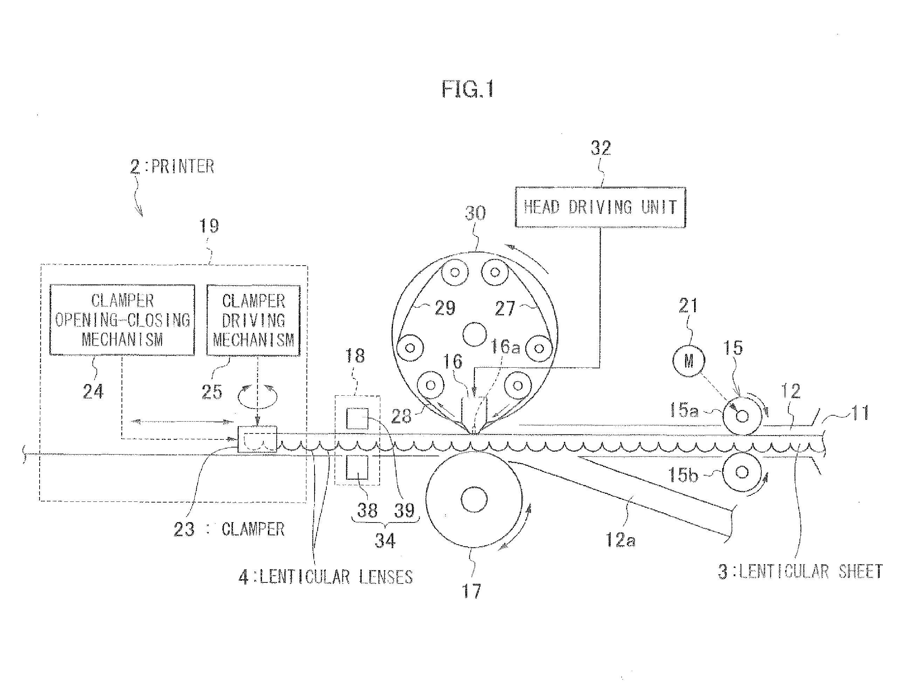

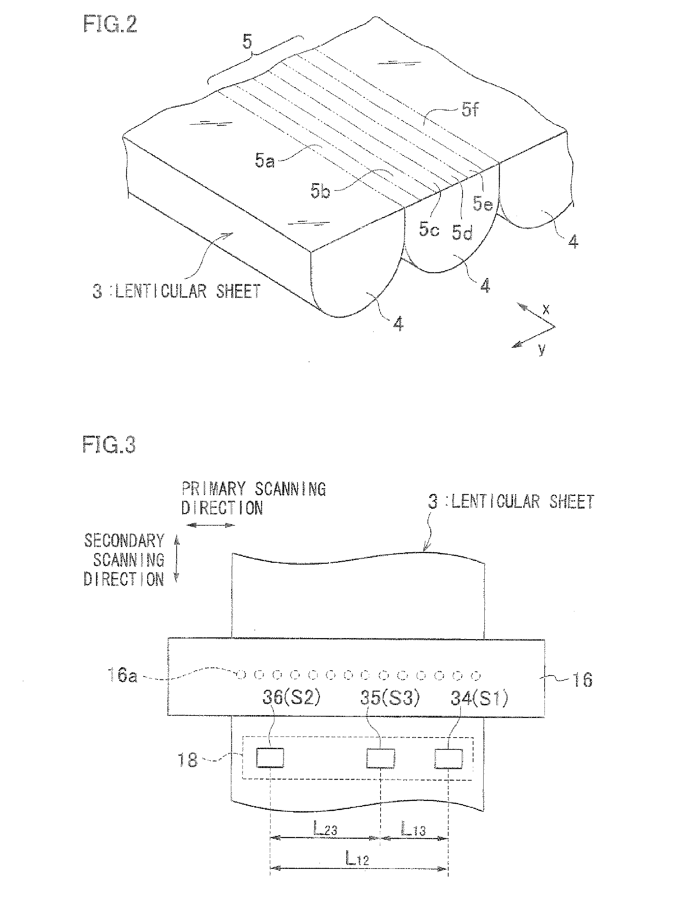

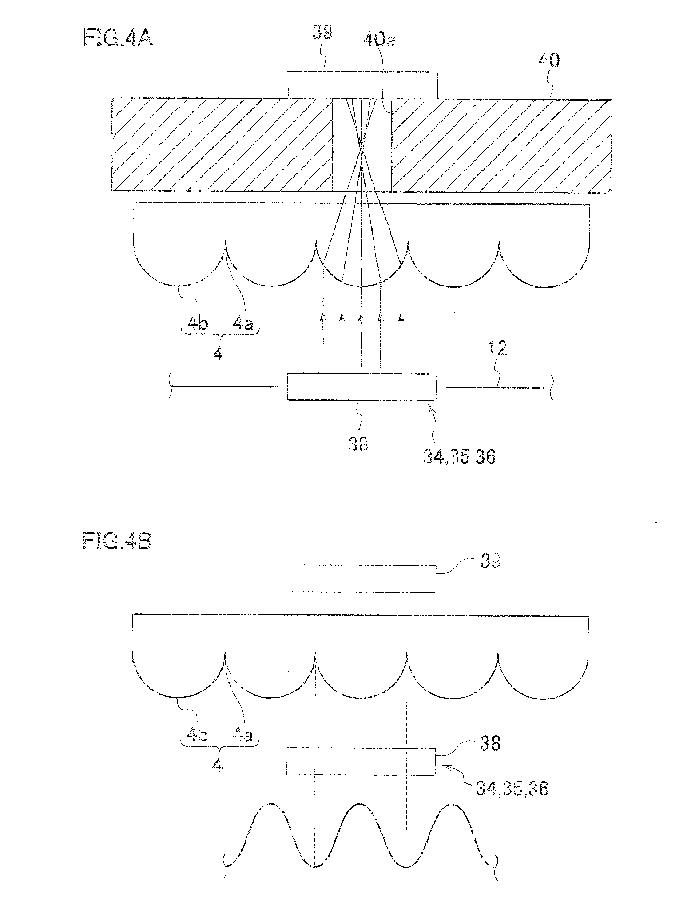

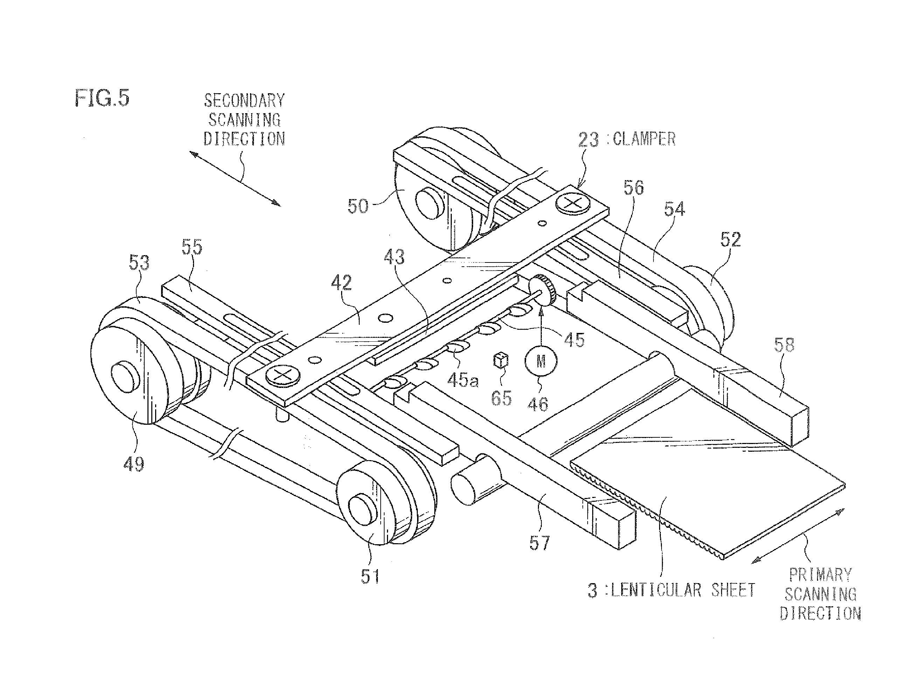

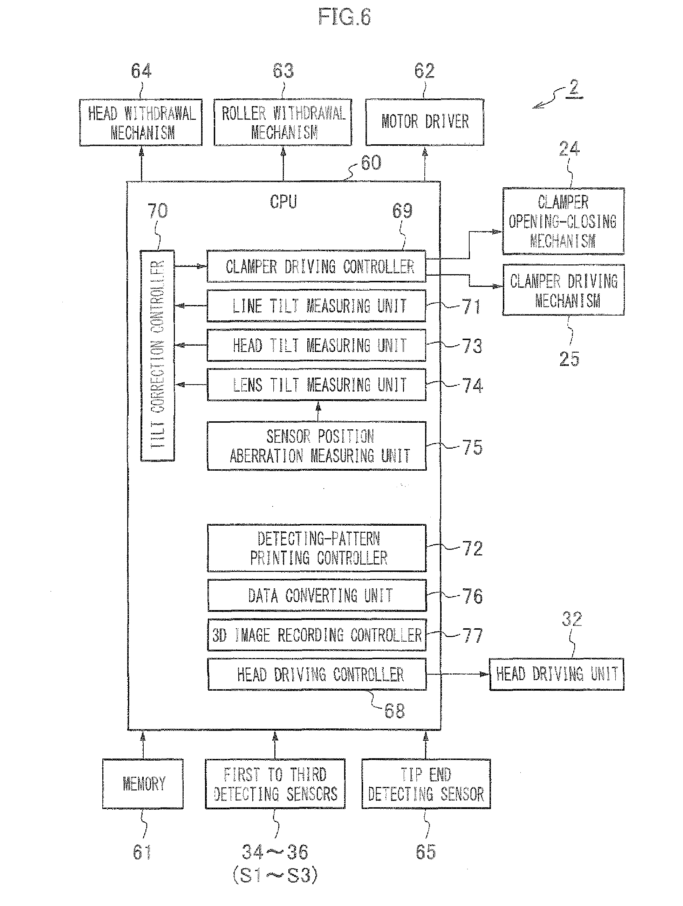

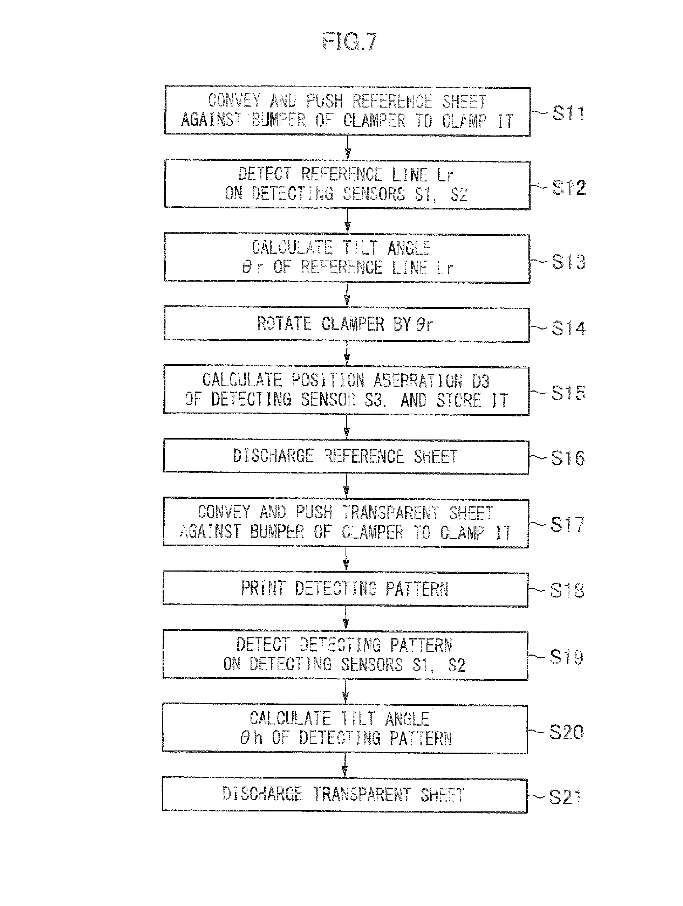

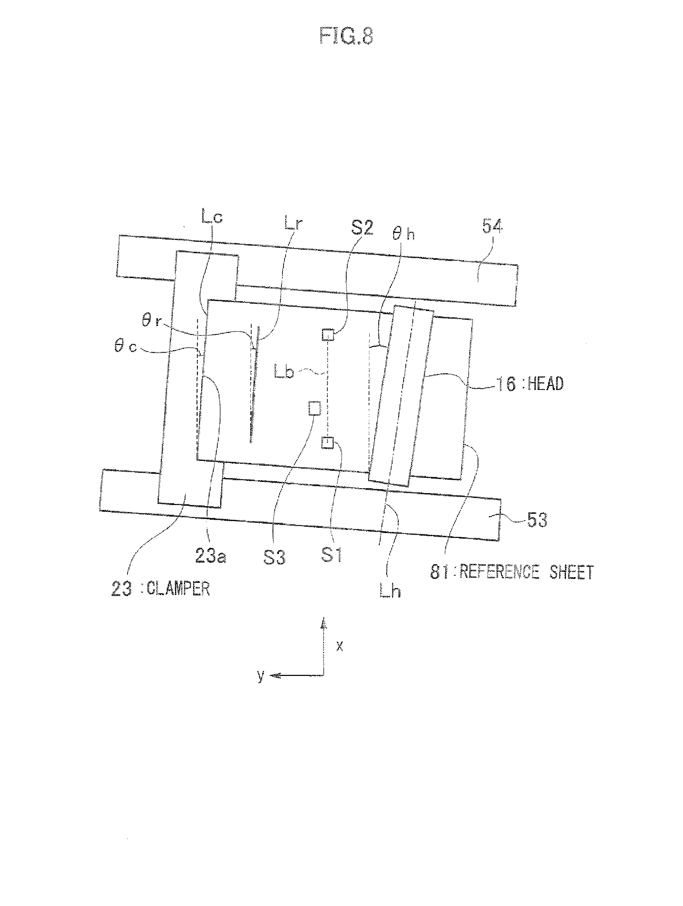

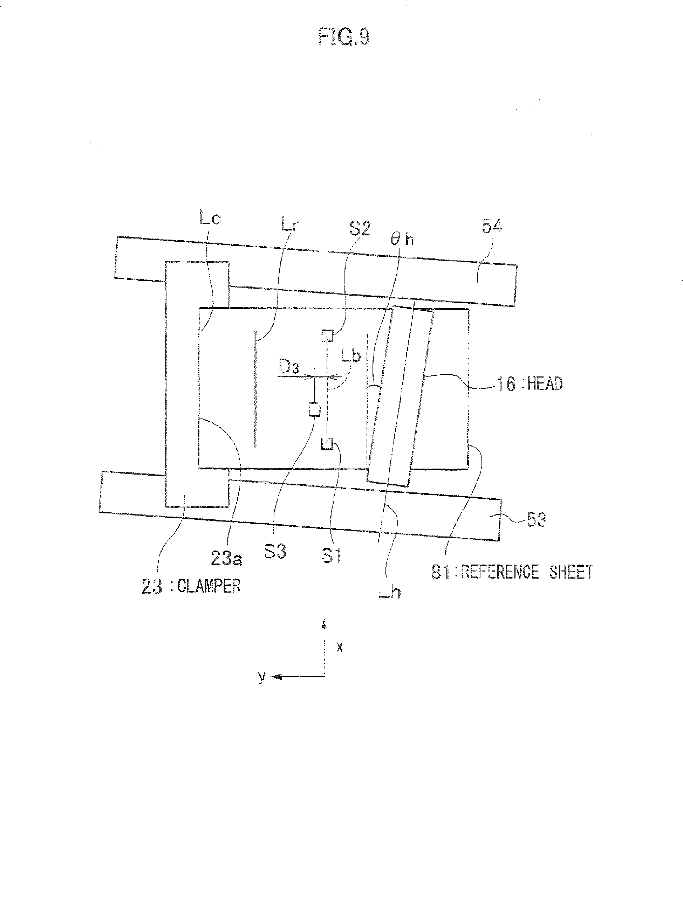

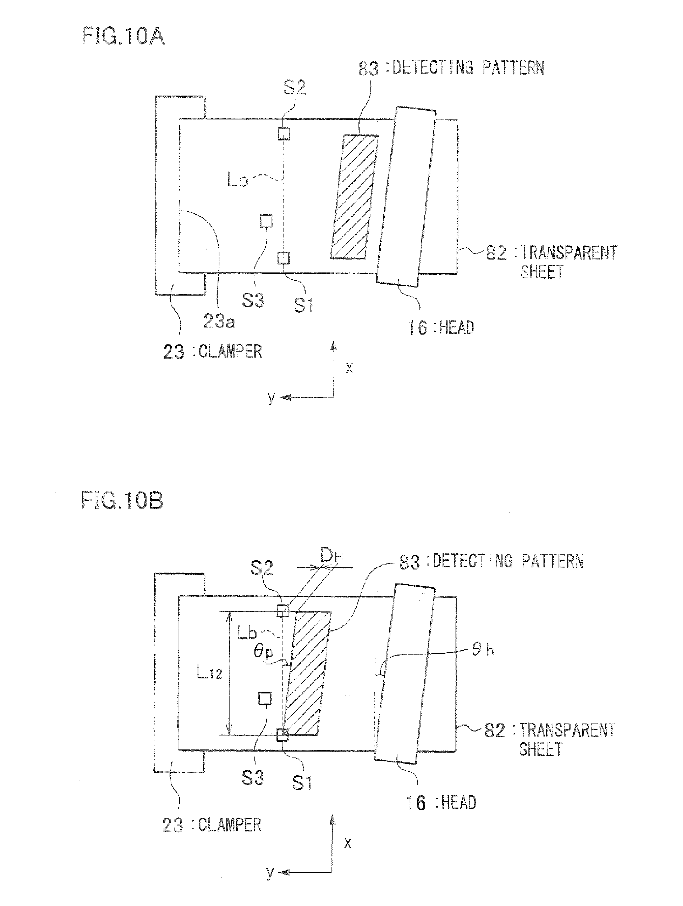

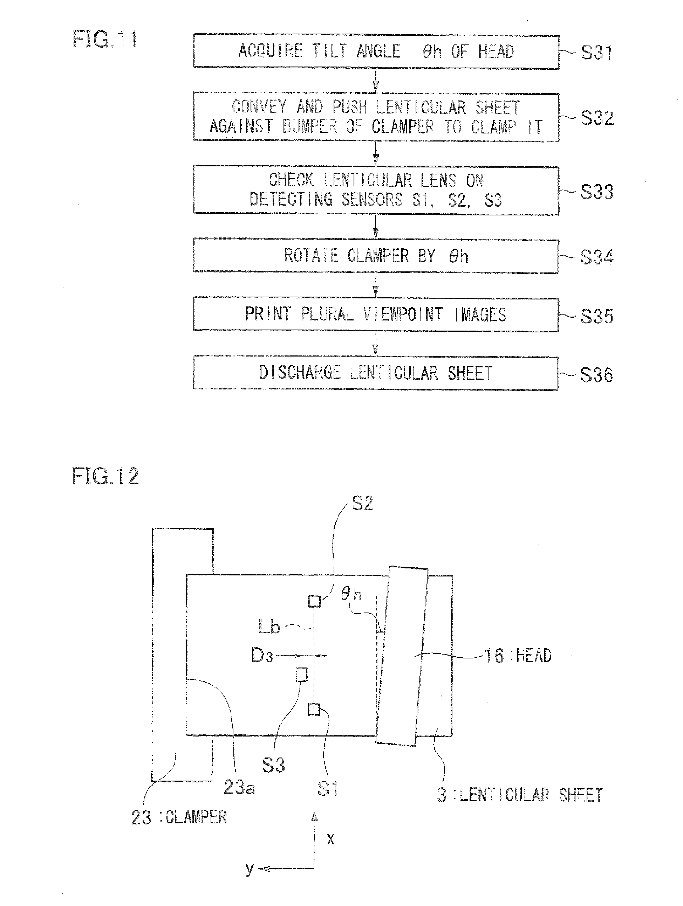

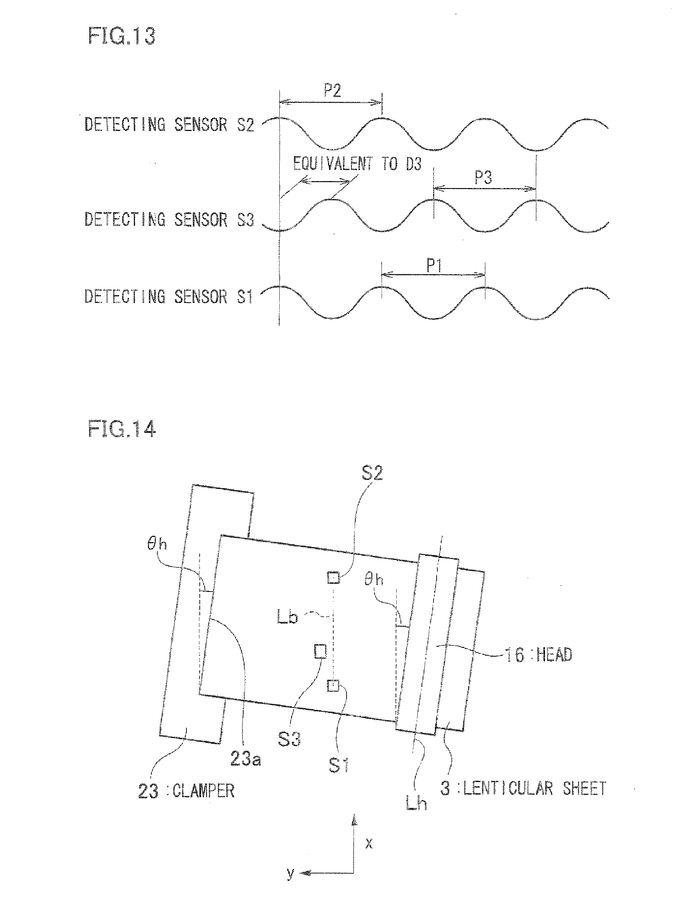

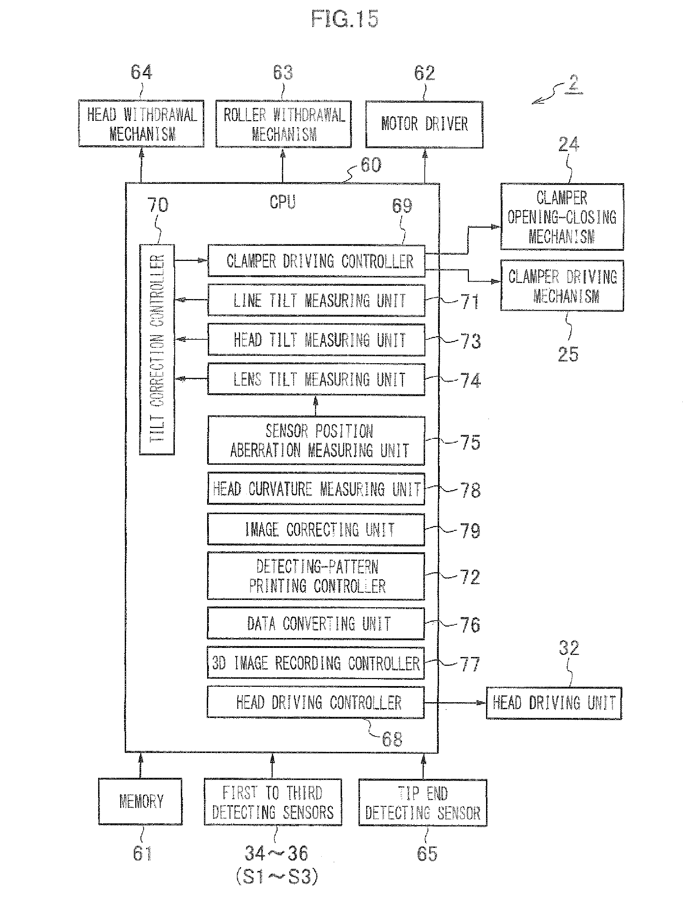

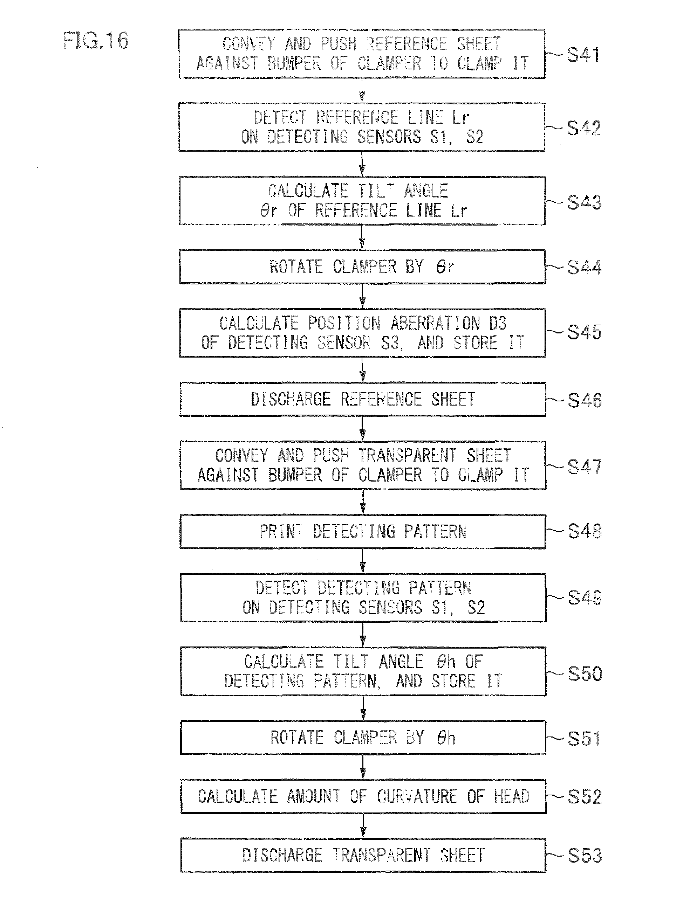

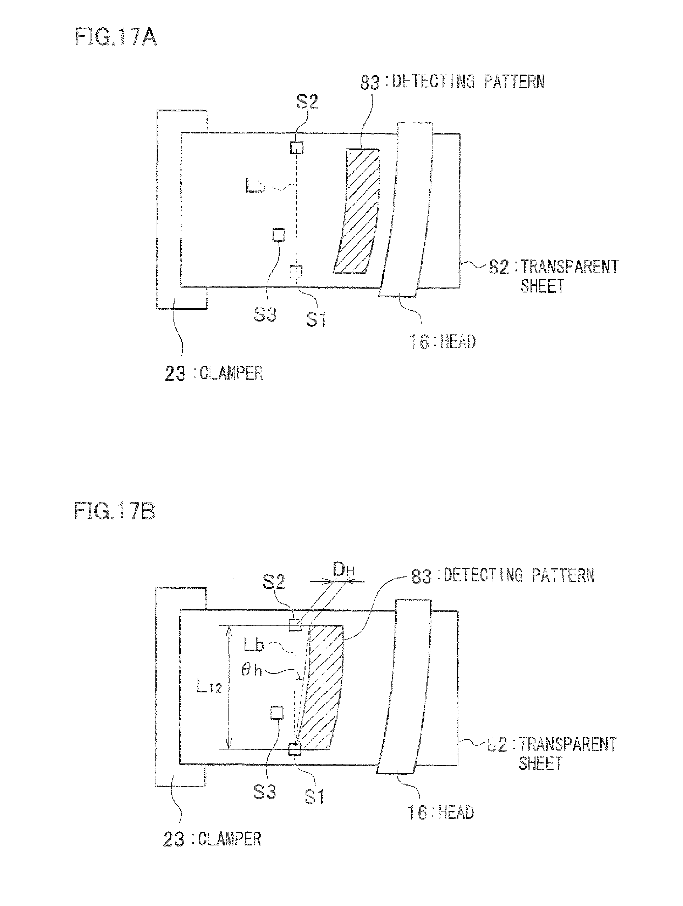

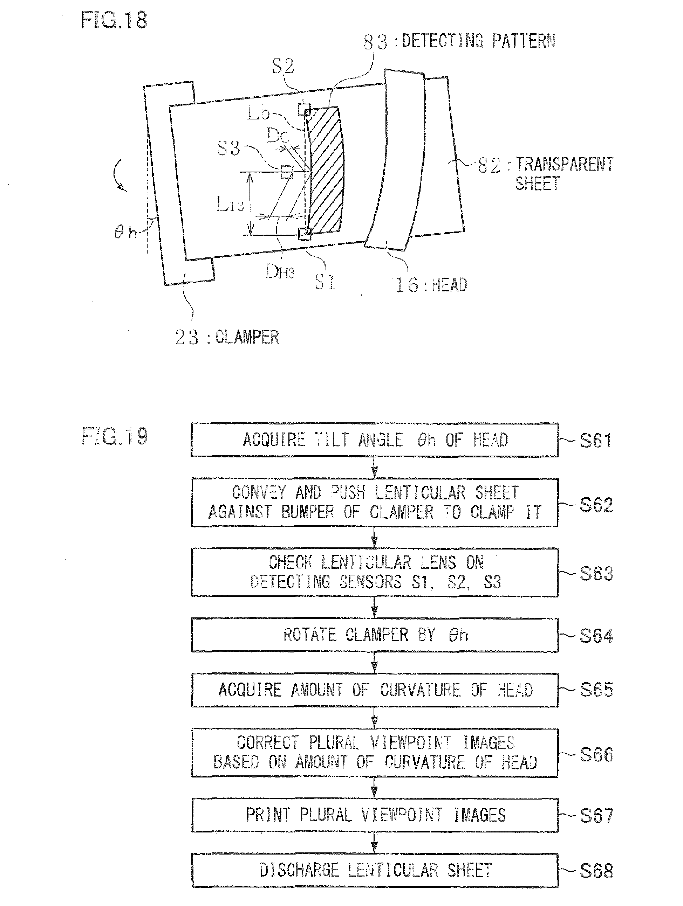

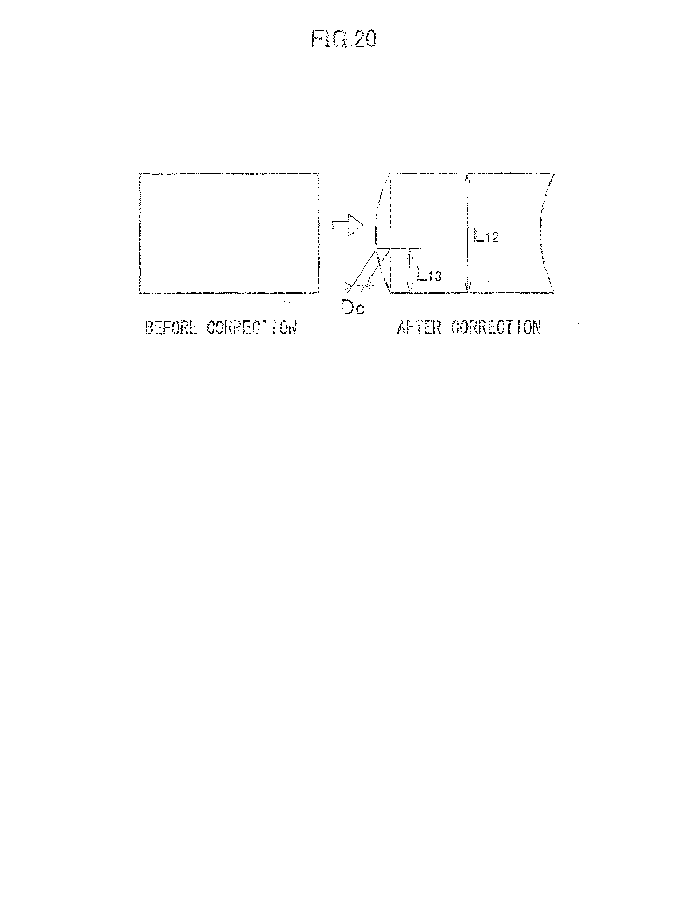

{Figure 1} Figure 1 is a schematic drawing of an image forming device to which the present invention is applied.
{Figure 2} Figure 2 is a perspective view of a lenticular sheet.
{Figure 3} Figure 3 is top view of an angle detecting unit.
{Figure 4A} Figure 4A is a side view of the angle detecting unit.
{Figure 4B} Figure 4B is an explanatory view of a detecting signal
{Figure 5} Figure 5 is a perspective view showing a clamp unit and its vicinity.
{Figure 6} Figure 6 is a block diagram showing a configuration of a control system of a printer according to the first embodiment.
{Figure 7} Figure 7 is a flow chart showing a flow of an example of an initial measurement processing according to the first embodiment.
{Figure 8} Figure 8 is an explanatory view showing a state in which a bumper of a clamper and a head are tilted relative to a base line.
{Figure 9} Figure 9 is an explanatory view showing a state in which the bumper of the clamper and the head are parallel to the base line.
{Figure 10A} Figure 10A is an explanatory view showing a state in which a detecting pattern for detecting the tilt of the head is printed.
{Figure 10B} Figure 10B is an explanatory view showing a state in which the detecting pattern is being detected on the detecting sensors.
{Figure 11} Figure 11 is a flow chart showing a flow of an example of 3D image forming processing according to the first embodiment.
{Figure 12} Figure 12 is an explanatory view showing a state in which the lenticular sheet is fed.
{Figure 13} Figure 13 is an explanatory view showing an example of detecting signals of the detecting sensors.
{Figure 14} Figure 14 is an explanatory view showing a state in which the tilt of the head is adjusted to agree with the tilt of the bumper of the clamper.
{Figure 15} Figure 15 is a block diagram showing a configuration of a control system of the printer according to the second embodiment.
{Figure 16} Figure 16 is a flow chart showing a flow of an example of initial measurement processing according to the second embodiment.
{Figure 17A} Figure 17A is an explanatory view showing in which the detecting pattern for detecting the tilt and the amount of curvature of the head is printed.
{Figure 17B} Figure 17B is an explanatory view showing a state in which the detecting pattern is being detected on the detecting sensors.
{Figure 18} Figure 18 is an explanatory view used for explaining measurement of the amount of curvature of the head.
{Figure 19} Figure 19 is a flow chart showing a flow of an example of 3D image forming processing according to the second embodiment.
{Figure 20} Figure 20 is an explanatory view showing a viewpoint image before and after image correction.

### {Description of Embodiments}

Hereinafter, detailed description will be provided on the embodiments of the present invention with reference to the attached drawings.

Figure 1 is a schematic drawing showing a printer 2 to which the present invention is applied. The printer 2 records parallax images on the back surface of a lenticular sheet 3.

As shown in Figure 2, the lenticular sheet 3 has on its surface an array of a number of lenticular lenses 4 (also referred to simply as "lenses"), each of which has a substantially semi-cylindrical shape, and the lenticular sheet 3 has a flat back surface. Each lenticular lens 4 is a cylindrical lens having a surface formed in a part of a cylindrical shape. The "lenticular lens" of the present invention is not limited to the shape shown in Figure 2, and may include other cylindrical lenses.

The plural lenses 4 are aligned in the secondary scanning direction y (conveying direction) on the surface of the lenticular sheet 3, and the lenticular sheet 3 is conveyed while the longitudinal direction of the lenses 4 is substantially parallel to the primary scanning direction x.

On the back surface of the lenticular sheet 3, image regions 5 are virtually assigned to the lenses 4 such that one image region 5 corresponds to one lens 4. Each image region 5 is virtually sectioned into plural micro areas 5a to 5f in the alignment direction of the lenses 4 in such a manner that each micro area corresponds to each of viewpoints (6 viewpoint in this example) required for displaying a 3D image, and each linear image into which the parallax image is linearly divided is recorded in each of the micro areas 5a to 5f. For example, a parallax image for the first viewpoint is printed in the first micro area 5a.

As shown in Figure 1, the printer 2 includes a conveyance track 12 where the lenticular sheet 3 fed from a conveyance port 11 is conveyed. There are provided on the conveyance track 12 a pair of feeding rollers 15, a head 16 and a platen roller 17, a tilt angle detecting unit 18, and a clamp unit 19 in the order from the upstream to the downstream of the conveyance direction.

The clamp unit 19 includes a clamper 23 as a holding unit detachably clamping (holding) a tip end of the lenticular sheet 3, a clamper opening-closing mechanism 24 for switching a clamping state of the lenticular sheet 3 between a closing state where the lenticular sheet 3 is clamped and an opening state where the lenticular sheet 3 is unclamped, and a clamper driving mechanism 25 of reciprocatingly moving the clamper 23 along the conveyance track 12. The clamper 23 is moved by the clamper driving mechanism 25 between a clamping position for clamping or unclamping the tip end of the lenticular sheet 3 that is fed by the pair of the feeding rollers 15, and an end portion located more downstream than the clamping position. Specifically, the lenticular sheet 3 clamped by the clamper 23 is reciprocatingly moved in the secondary scanning direction vertical to the primary scanning direction. The clamper driving mechanism 25 rotates the clamper 23 around an axis vertical to the conveyance surface of the conveyance track 12. Specifically, the clamper driving mechanism 25 can rotate the lenticular sheet 3 around the axis vertical to the conveyance surface at any angle.

There is provided a return conveyance track 12a extending diagonally downward from the conveyance track 12 in the vicinity of the upstream of the platen roller 17 in the upstream direction. There is provided a discharge port (not shown) at the tip end of the return conveyance track 12a so as to discharge a printed lenticular sheet 3 out of the printer 2.

The head 16 and the platen roller 17 are so disposed as to hold the conveyance track 12 therebetween. There is disposed at the bottom of the head 16 a recording element array of a number of linearly aligned heater elements (recording elements 16a) in the primary scanning direction. The head 16 is moved between a pressing position for pressing a recording film onto the back surface of the lenticular sheet 3 on the platen rollers 17 and a standby position where the head 16 is withdrawn upward from the pressing position.

The recording film includes an image receiving layer film 27, an ink film 28, and a back layer film 29. The films 27 to 29 are mounted to a film exchange mechanism 30. When being heated by the head 16 in the state of being laid on the back surface of the lenticular sheet 3, the image receiving layer film 27 transfers a transparent image receiving layer for allowing a color ink from the ink film 28 to adhere onto the back surface of the lenticular sheet 3. The ink film 28 is a dye sublimation ink film, and when the ink film 28 is heated by the head 16 in the state of being laid on the back surface of the lenticular sheet 3, the ink film 28 sublimates yellow, magenta, and cyanogen inks so as to allow them to adhere to the image receiving layer. The back layer film 29 transfers a white back layer onto an image when the back layer film 29 is heated by the head 16 in the state of being laid on the image recorded on the lenticular sheet 3.

The head driving unit 32 drives the head 16. The head driving unit 32 generates heat required for transferring the image receiving layer and the back layer on each heater element when forming these layers, and also generates heat on each heater element based on the parallax image data when recording the image by using the ink film 28.

The tilt angle detecting unit 18 optically detects a tilt angle θL of each lens 4 of the lenticular sheet 3 that is conveyed through the clamp unit 19. The tilt angle θL of each lens 4 is an angle defined by the longitudinal direction and the primary scanning direction of the lens 4.

As shown in Figure 3, the tilt angle detecting unit 18 includes first to third detecting sensors 34, 35, 36. The first detecting sensor 34 (S1) is disposed at a position facing one side end of the lenticular sheet 3. The second detecting sensor 36 (S2) is disposed at a position facing the other side end of the lenticular sheet 3. The third detecting sensor (S3) is disposed at a position closer to the first detecting sensor 34 (S1) than the center between the first detecting sensor 34 (S1) and the second detecting sensor 36 (S2). Specifically, the distance L13 between the first detecting sensor 34 and the third detecting sensor 35 is greater than the distance L23 between the second detecting sensor 36 (S2) and the third detecting sensor 35 (S3). The reference numeral L12 designates the distance between the first detecting sensor 34 (S1) and the second detecting sensor 36 (S2).

As shown in Figure 3, all the detecting sensors S1, S2, S3 are preferably arranged in a straight line in the primary scanning directing, but they are actually arranged out of this straight line in some cases; therefore, correction as described later is required.

The head 16 includes plural recording elements 16a aligned in the longitudinal direction of the head 16. As shown in Figure 3, the longitudinal direction of the head 16 is preferably parallel to the primary scanning direction, but the longitudinal direction of the head 16 is actually inclined relative to the primary scanning direction in some cases, therefore, correction as described later is required.

Specifically, the three detecting sensors 34, 35, 36 disposed on the conveyance track of the lenticular sheet 3 are linearly arranged in the primary scanning direction in such a manner that at least one of the detecting sensors 34, 35, 36 has an interval different from any one of intervals of the other detecting sensors, thereby precisely finding the tilt angle θL of each lens 4 based on the detecting signal output from the detecting sensors 34, 35, 36.

As shown in Figure 4A, each of the detecting sensors 34 to 36 is constituted by a light-emitting diode (referred to as a "LED", hereinafter) 38 and a photo sensor 39 that are oppositely disposed to each other with the conveyance surface of the lenticular sheet 3 located therebetween. A slit plate 40 is disposed between the photo sensor 39 and the conveyance surface of lenticular sheet 3. A slit hole 40a is so formed in the slit plate 40 as to have a width through which a light for substantially one lens 4 passes. The light irradiated from the LED 38 toward the lenticular sheet 3 passes through the lenticular sheet 3, and is then received on the photo sensor 39 while the detected area is restricted by the slit hole 40a. The photo sensor 39 outputs a detected signal in accordance with the light input.

As shown in Figure 4B, the light input of the photo sensor 39 varies depending on the position of each lens 4 relative to each of the detecting sensors 34 to 36; consequently, the magnitude of the detected signal is varied. The magnitude of the detected signal of this example becomes gradually increased up to the maximum during a period when a boundary between two adjacent lenses 4 opposes the detecting sensor 34 (35, 36) until a peak of the next lens 4 opposes the detecting sensor 34 (35, 36), and thereafter the magnitude of the detected signal becomes decreased, and then becomes increased again when another boundary between the next two adjacent lenses 4 opposes the detecting sensor 34 (35, 36).

Figure 5 is a perspective view showing the clamp unit 19 and its vicinity. As shown in Figure 5, the clamper 23 includes a fixed plate 42 and a movable plate 43. The fixed plate 42 is a flat plate having a longitudinal length greater than the width of the lenticular sheet 3, and is disposed in parallel to the conveyance surface. The movable plate 43 is rotatable between a sandwiching position for holding the lenticular sheet 3 between the movable plate 43 and the fixed plate 42, and a releasing position for unholding the lenticular sheet 3. A spring (not shown) is disposed between the fixed plate 42 and the movable plate 43, and the movable plate 43 is urged toward the sandwiching position by this spring.

The clamper opening-closing mechanism 24 includes a cam shaft 45 for rotating the movable plate 43, and a clamp releasing motor 46 for rotating the cam shaft 45. The cam shaft 45 is disposed in vicinity of the clamper 23 at the clamping position. The cam shaft 45 is so rotated by the clamp releasing motor 46 as to displace the movable plate 43 through cams 45a attached to the cam shaft 45 between the sandwiching position and the releasing position, thereby switching the opening state and the closing state of the clamper 23.

The clamper driving mechanism 25 includes a left motor 49 and a right motor 50, a left pulley 51 and a right pulley 52 that are attached to rotational shafts, a left belt 53 suspended between the left motor 49 and the left pulley 51, and a right belt 54 suspended between the right motor 50 and the right pulley 52.

The both ends of the clamper 23 are attached to the left belt 53 and the right belt 54 respectively such that the each end is rotatable around the axis vertical to the respective conveyance. If the left motor 49 and the right motor 50 rotate in the same direction, the clamper 23 is moved in the secondary direction through the left and the right belts 53, 54. If the left motor 49 and the right motor 50 rotate in the reverse direction to each other, or if only one of left motor 49 and the right motor 50 rotates, the clamper 23 is rotated around the axis vertical to the conveyance surface through the left and the right belts 53, 54.

The clamper driving mechanism 25 includes left and right guide rails 55 and 56 for guiding the clamper 23 in the secondary scanning direction. A left tilt restricting guide 57 and a right tilt restricting guide 58 are disposed inward of the left and the right guide rails 55 and 56. The left and the right tilt restricting guides 57, 58 restrict the tilt angle of the lenticular sheet 3 to be fed from the pair of the feeding rollers 15 to the clamp unit 19 at a predetermined angle or less.

### <First embodiment>

Figure 6 is a block diagram showing a configuration of a control system of the printer 2 according to the first embodiment. The same numeral references are provided for the structural elements shown in Figure 1 to Figure 5.

In Figure 6, the CPU 60 comprehensively controls each element of the printer 2. The memory 61 stores programs and data for controlling the printer 2. The motor driver 62 rotates or stops the pair of the feeding rollers 15 through the motor 21 in accordance with the control by the CPU 60. A head withdrawal mechanism 64 moves the head 16 to the pressing position or to the standby position in accordance with the control of the CPU 60. A tip end detecting sensor 65 (see Figure 5) is disposed at the upstream of the clamping position, and outputs a tip end detecting signal to the CPU 60 when the tip end detecting sensor 65 detects a passage of the tip end of the lenticular sheet 3.

A head driving controller 68 controls the driving of the head 16 through the head driving unit 32.

A clamper driving controller 69 switches the opening state and the closing state of the clamper 23 through the clamper opening-closing mechanism 24. The clamper driving controller 69 controls the movement in the secondary scanning direction and the rotation of the clamper 23 through the clamper driving mechanism 25. The clamper driving controller 69 of this example controls the holding and the unfolding of the sheet such as the lenticular sheet 3 and others through the claanper opening-closing mechanism 24. The clamper driving controller 69 of this example adjusts the tilt angle of each lens 4 of the lenticular sheet 3 through the clamper driving mechanism 25.

A tilt correction controller 70 rotates the clamper 23 through the clamper driving controller 69 so as to carry out the tilt correction control. The detail of the tilt correction control will be described later.

A line tilt measuring unit 71 conveys a reference sheet 81 shown in Figure 8 through the pair of feeding rollers 15 and others, and pushes the reference sheet 81 against a bumper 23a of the clamper 23 so as to clamp the reference sheet 81, and in this clamping state, the reference line Lr of the reference sheet 81 is detected on the first detecting sensor S1 and the second detecting sensor 82. Based on the detecting signals of the first detecting sensor S1 and the second detecting sensor S2, the line tilt measuring unit 71 calculates the tilt angle θr of the reference line Lr of the reference sheet 81 relative to a base line Lb (primary scanning direction x). In this way, the tilt angle θc of the bumper 23a of the clamper 23 is obtained. The reference sheet 81 has an end face Lc that abuts against the bumper 23a of the clamper 23, and the reference line Lr is formed on the reference sheet 81 to be parallel to this end face Lc. The base line Lb is a virtual straight line between the first detecting sensor S1 and the second detecting sensor S2, and extends in the same direction as the primary scanning direction x.

A detecting-pattern printing controller 72 conveys and pushes a transparent sheet 82 against the bumper 23a of the clamper 23 through the pair of the feeding rollers 15 and others, as shown in Figure 10A, and then prints a detecting pattern 83 used for detecting the tilt angle of the head 16 through the head 16 while the transparent sheet 82 is being clamped by the clamper 23.

A head tilt measuring unit 73 detects the detecting pattern 83 of the transparent sheet 82 on the first detecting sensor S1 and the second detecting sensor S2 as shown in Figure 10B, calculates the tilt angle θp of the detecting pattern 83 relative to the base line Lb (primary scanning direction x) based on the detecting signals of the first detecting sensor S1 and the second detecting sensor S2, and stores the tilt angle θp as the tilt angle θh of the head 16 on the memory 61.

A lens tilt measuring unit 74 measures a tilt angle of the lenticular lens 4 of the lenticular sheet 3 relative to the base line Lb (primary scanning direction x) based on the detecting signals of the plural detecting sensors S1, S2, S3 and the distance between the detecting sensors.

The above described tilt correction controller 70 executes various tilt correction controls based on measurement results of the line tilt measuring unit 71, the head tilt measuring unit 73, and the lens tilt measuring unit 74.

First, the tilt correction controller 70 of this example executes the tilt correction control to rotate the clamper 23 through the clamper driving mechanism 25 so as to position the reference line Lr of the reference sheet 81 to be parallel to the base line Lb based on the tilt angle θr of the reference line Lr of the reference sheet 81.

Second, the tilt correction controller 70 of this example executes the tilt correction control to adjust the tilt angle of each lenticular lens 4 and the tilt angle of the head 16 to agree with each other relative to the base line Lb (primary scanning direction) based on the tilt angle θ of the lenticular lens 4 calculated on the lens tilt measuring unit 74, and the tilt angle of the head calculated on the head tilt measuring unit 73 and stored on the memory 61.

Third, the tilt correction controller 70 of this example executes the tilt correction control to rotate the clamper 23 around the axis vertical to the conveyance surface of the lenticular sheet 3, so as to change the tilt angle of each lenticular lens 4.

The sensor position aberration measuring unit 75 calculates each position aberration of the detecting sensors S1 to S3, and stores calculated position aberration on the memory 61. In the present embodiment, as shown in Figure 8, the position of the third detecting sensor S3 is allowed to deviate from the base line Lb between the first detecting sensor S1 and the second detecting sensor S2. The sensor position aberration measuring unit 75 calculates the position aberration of the third detecting sensor S3 from the base line Lb based on the detecting signals of the detecting sensors S1, S2, S3 that have detected the reference line Lr of the reference sheet 81. The lens tilt measuring unit 74 corrects the detecting signal of the third detecting sensor S3 based on the position aberration of the third detecting sensor S3, which is calculated on the sensor position aberration measuring unit 75 and stored on the memory 61, thereby calculating the tilt angle of each lenticular lens 4.

A data converting unit 76 reads a two-viewpoint parallax image from the memory 61 and converts this parallax image into a multi-viewpoint (six-viewpoint, for example) parallax image.

A 3D image recording controller 77 drives the head 16 through the head driving controller 68 and the head driving unit 32, and records the multiple viewpoint parallax images generated by the data converting unit 76 as the 3D image (multiple-viewpoint parallax image) on the back surface of the lenticular sheet 3 with the head 16.

Figure 7 is a flow chart showing a flow of an example of an initial measurement processing according to the first embodiment. This processing is executed in accordance with a program by the CPU 60.

As shown in Figure 8, because the base line Lb between the first detecting sensor S1 and the second detecting sensor S2 is secured to be a straight line, this base line Lb is defined as a base line along the primary scanning direction x. The position of the third detecting sensor S3 is assumed to deviate from the base line Lb. The bumper 23a of the clamper 23 is assumed not to be parallel to the base line Lb. The longitudinal direction of the head 16 is assumed not to be parallel to the base line Lb. Hence, these are necessary to be corrected.

The line tilt measuring unit 71 conveys the reference sheet 81 on which the reference line Lr is formed through the pair of the feeding rollers 15, and pushes the end face Lc of the reference sheet 81, which intersects the secondary scanning direction y of the reference sheet 81, against the bumper 23a of the clamper 23, and clamps (holds) the reference sheet 81 with the clamper 23 (Step S11). The reference line Lr is a straight line secured to be parallel to an end face Lc of the reference sheet 81, and is formed on one (upper) surface of the reference sheet 81 in advance. The bumper 23a of the clamper 23 is tilted relative to the base line Lb by θc. Accordingly, the end face Lc of the reference sheet 81 that is pushed against the bumper 23a is also tilted by θc relative to the base line Lb. In this example, the end face Lc of the reference sheet 81 is pushed against the bumper 23a of the clamper 23, but the moving speed of the right and the left ends of the lenticular sheet 3 may be adjusted to agree with each other so as not to rotate the reference sheet 81 in the case of not pushing the end face Lc against the bumper 23a, instead.

The line tilt measuring unit 71 drives the belts 53, 54 while the reference sheet 81 is being clamped by the clamper 23, and then detects the reference line Lr on the reference sheet 81 on the first detecting sensor S1 and the second detecting sensor S2 (Step S 12).

The line tilt measuring unit 71 calculates the tilt angle θr of the reference line Lr relative to the base line Lb based on the detecting signals of the first detecting sensor S1 and the second detecting sensor S2 (Step S13). Since the reference line Lr is formed to be parallel to the end face Lc of the sheet, the tilt angle θr is the same as the tilt angle θc in the longitudinal direction of the clamper 23.

As shown in Figure 9, the clamper driving controller 69 rotates the clamper 23 by θr (= θc) through the clamper driving mechanism 25 such that the reference line Lr of the reference sheet 81 becomes parallel to the base line Lb (Step S14). In this manner, Lb, Lr, and Lc become parallel to one another, thereby securing the bumper 23a of the clamper 23 to be parallel to Lb.

Based on the detecting signals of the detecting sensors S1, S2, S3 that have detected the reference line Lr, the position aberration D3 of the third detecting sensor S3 from the base line Lb in the secondary scanning direction y is calculated on the sensor position aberration measuring unit 75, and this position aberration D3 is stored on the memory 61 (Step S15). Specifically, the first to the third detecting sensors S1, S2, S3 are not always linearly aligned on the base line Lb, and thus the position aberration D3 is acquired. The detecting signal of the third detecting sensor S3 has its peak deviating from the peaks of the detecting signals of the first and the second detecting sensor S1, S2 located on the base line Lb; therefore, the position aberration D3 is calculated based on this aberration of the peak position.

Subsequently, the reference sheet is discharged (Step S16).

As shown in Figure 10A, the detecting-pattern printing controller 72 conveys the transparent sheet 82 (detecting sheet) through the pair of the feeding rollers 15, and pushes the transparent sheet 82 (detecting sheet) against the bumper 23a of the clamper 23, so as to clamp the transparent sheet 82 with the clamper 23 (Step S17), and while the transparent sheet 82 is being moved in the secondary scanning direction y through the belts 53, 54, the detecting-pattern printing controller 72 prints the detecting pattern 83 for detecting the tilt angle of the head 16 on the transparent sheet 82 with the head 16 (Step S18).

As shown in Figure 10B, the head tilt measuring unit 73 then detects the detecting pattern 83 printed on the transparent sheet 82 on the first detecting sensor S1 and the second detecting sensor S2 while moving the transparent sheet 82 in the secondary scanning direction y by driving the belts 53, 54 with the transparent sheet 82 having the detecting pattern 83 thereon clamped by the clamper 23 (Step S19).

Subsequently, the head tilt measuring unit 73 calculates the tilt angle θp of the detecting pattern 83 relative to the base line Lb (primary scanning direction x) between the first detecting sensor S1 and the second detecting sensor S2 based on the detecting signals of the first detecting sensor S1 and the second detecting sensor S2, and stores the calculated tilt angle θp as the tilt angle θh of the head 16 relative to the base line Lb on the memory 61 (Step S20). With reference to Figure 10B, the tilt angle θp (= Oh) can be calculated by using L12 and DH, where L12 denotes the distance between the first detecting sensor S1 and the second detecting sensor S2, and DH denotes the detecting position aberration between the first detecting sensor S1 and the second detecting sensor S2 relative to the edge of the detecting pattern 83; that is, θh = tan⁻¹ (DH/L12).

Following the above step, the transparent sheet is discharged (Step S21).

Figure 11 is a flow chart showing a flow of one example of the 3D image forming processing according to the first embodiment. This processing is executed in accordance with the program by the CPU 60.

The tilt angle θh of the head 16 is acquired from the memory 61 (Step S31).

As shown in Figure 12, the lenticular sheet 3 is then conveyed through the pair of the feeding rollers 15 such that the lenticular sheet 3 is pushed against the bumper 23a of the clamper 23, so as to clamp the lenticular sheet 3 by the clamper 23 (Step S32).

Each lenticular lens 4 of the lenticular sheet 3 is detected on the first to the third detecting sensors S1, S2, S3 (Step S33). As shown in Figure 13, the lens position can be determined to be correct by adjusting the respective peaks of the first detecting sensor S1 and the second detecting sensor S2 to agree with each other, and if the peak of the detecting signal of the third detecting sensor S3 deviates by the position aberration D3 (see Figure 12) relative to the peaks of the first and the second detecting sensors S1, S2. If the peak deviation of the detecting signal of the third detecting sensor S3 is not equivalent to D3, the clamper 23 is rotated for adjustment.

As shown in Figure 14, the clamper 23 is rotated by the tilt angle 8h through the clamper driving mechanism 25 (Step S34).

While each peak and each boundary of the lenticular lenses are being detected on the first and the third detecting sensors, six linear images are printed for every lenticular lens 4 on the back surface of the lenticular sheet 3 with the head 16, so as to form the 3D image (plural viewpoint images) on the lenticular sheet 3 (Step S35).

The lenticular sheet 3 on which the plural viewpoint images are recorded as the 3D image is discharged (Step S36).

The present embodiment has been described by using an example in which the tilt angles of each lenticular lens 4 and the head 16 are adjusted to agree with each other based on the tilt angle of each lenticular lens 4 calculated on the lens tilt measuring unit 74, but the clamper 23 may be rotated based on only the tilt angle of the head 16 if the lenticular lens 4 is secured to be parallel to the base line Lb. Specifically, the tilt correction controller 70 may rotate the clamper 23 through the clamper driving mechanism 25 based on the tilt angle θh of the head 16 stored on the memory 61 while the bumper 23a of the clamper 23 is set to be parallel to the base line Lb, thereby adjusting the tilt angle of each lenticular lens 4 with the tilt angle of the head 16. Each lenticular lens 4 may be adjusted to be parallel to the base line Lb by executing Step S 11 to Step S14 of Figure 7 using the reference sheet 81 as described in Figure 8 and Figure 9, for example.

### <Second embodiment>

Figure 15 is a block diagram showing a configuration of the control system of the printer 2 according to the second embodiment. The same numeral references are provided for the structural elements shown in Figure 1 to Figure 6, and description already provided in the first embodiment will be omitted, hereinafter.

A head curvature measuring unit 78 calculates amount of curvature in the longitudinal direction of the head 16 based on the detecting signals of the plural detecting sensors S1, S2, S3 that have detected the detecting pattern 83 on the transparent sheet 82 (detecting sheet), and stores the calculated amount of curvature on the memory 61.

An image correcting unit 79 corrects the viewpoint images formed on the lenticular sheet 3 based on the amount of curvature of the head 16 acquired from the memory 61 so as to cancel curvature distortion of the viewpoint images on the lenticular sheet 3 due to the curvature of the head 16.

Figure 16 is a flow chart showing a flow of an example of the measurement processing according to the second embodiment. This processing is executed in accordance with the program by the CPU 60. Steps S41 to S50 are the same as Steps S11 to S20 in the first embodiment shown in the drawing; thus description thereof will be omitted.

Figure 17A shows a state in which the detecting pattern 83 is printed on the transparent sheet 82 with the curved head 16 in Step S48. Since the head 16 is curved, the detecting pattern 83 printed by the head 16 on the transparent sheet is also curved. The curvature of the head 16 is exaggeratingly described in Figure 17A for the sake of easy understanding of the present invention. The curvature of the head 16 is actually slight, but in the example of Figure 2, each lenticular lens 4 is sectioned into six micro areas 5a to 5f, and each linear image is printed in each micro area; thus a greater curvature of the head 16 relative to the width of the micro areas 5a to 5f generates an image difficult to be stereoscopically viewed. Figure 17B shows a state in which the detecting pattern 83 printed on the transparent sheet 82 is being detected on the first detecting sensor S1 and the second detecting sensor S2 in Step S49.

In Step S51, the head curvature measuring unit 78 rotates the clamper 23 in the reverse direction to the tilt direction of the head 16 by the tilt angle θh through the clamper driving mechanism 25, so as to adjust the peak of the detecting signal of the detecting sensor S1 to agree with the peak of the detecting signal of the detecting sensor S2. In this manner, it is possible to precisely calculate the amount of curvature.

In Step S52, the head curvature measuring unit 78 calculates the amount of curvature Dc of the head 16 based on the detecting signals of the detecting sensors S1, S2, S3, and stores the detected amount of curvature Dc on the memory 61. The amount of curvature Dc can be calculated by using the formula Dc = DH3 - D3. In this case, DH3 designates the distance between the third detecting sensor S3 and the edge of the detecting pattern 83, D3 is the position aberration of the third detecting sensor S3 from the base line Lb (see Figure 9). D3 is calculated in Step S45, and stored on the memory 61.

In Step S53, the transparent sheet 82 is discharged.

Figure 19 is a flow chart showing a flow of an example of the 3D image forming processing. Step S61 to S64 are the same as those Steps of the 3D image forming processing of the first embodiment shown in Figure 11, and description thereof will be omitted.

In Step S65, the image correcting unit 79 acquires the amount of curvature Dc of the head 16 from the memory 61.

In Step S66, the image correcting unit 79 corrects the curvature of the plural viewpoint images based on the amount of curvature Dc acquired from the memory 61 so as to cancel the curvature distortion of the images formed on the lenticular sheet 3 due to the curvature of the head 16. Specifically, as shown in Figure 20, the amount of correction (equivalent to Dc) of the plural viewpoint images is calculated based on the amount of curvature Dc (= DH3 - D3) calculated on the head curvature measuring unit 78, so as to generate the view point images curved in the reverse direction to the curvature direction of the head 16.

In Step S 67, based on the corrected view point images, the plural linear images are printed for each lenticular lens 4 on the back surface of the lenticular sheet 3 with the head 16, so as to form the 3D image (plural viewpoint images) on the lenticular sheet 3.

In Step S68, the lenticular sheet 3 on which the 3D image is recorded is discharged.

The present embodiment has been described by using an example of providing the three detecting sensors S1, S2, S3 on the conveyance track, but more detecting sensors than the detecting sensors of this example, such as four or more detecting sensors, may be provided on the conveyance track in order to detect the amount of curvature with higher accuracy and correct the distortion of the head 16 with higher accuracy.

Particularly, in order to detect the amount of curvature of the head 16 with fewer sensors with a maximum accuracy, a detecting sensor for detecting the amount of curvature Dc may be disposed in the middle position between the first detecting sensor S1 and the second detecting sensor S2 in the primary scanning direction.

The first and second embodiments have been described by using an example of adjusting the tilt angle by using the clamper 23, but the present invention is not limited to this.

A head rotating unit may be so provided as to rotate the head 16 around the axis vertical to the conveyance surface of the lenticular sheet 3. In this case, the tilt correction controller 70 rotates the head 16 through this head rotating unit.

The first and the second embodiments have been described by using an example of pushing the lenticular sheet 3 against the bumper 23a of the clamper 23, but the present invention is not limited to this. For example, it may be configured to adjust the right and the left ends of the lenticular sheet 3 to have the same moving speed, so that the lenticular sheet 3 is conveyed in the secondary scanning direction without being rotated.

The first and the second embodiments have been described by using an example of holding the lenticular sheet 3 with the clamper 23, but the holding unit of holding the lenticular sheet 3 is not limited to the clamper 23.

It should be apparent that present invention is not limited to the examples described in the present specification and in the drawings, and various design changes and modifications can be made without departing from the spirit and scope of the invention.

### {Reference Signs List}

- 2: Printer
- 3: Lenticular sheet
- 4: Lenticular lens
- 15: Pair of feeding rollers
- 16: Head
- 19: Clamp unit
- 23: Clamper
- 24: Clamper opening-closing mechanism
- 25: Clamper driving mechanism
- 34: First detecting sensor (S1)
- 35: Second detecting sensor (S2)
- 36: Third detecting sensor (S3)
- 60: CPU
- 61: Memory
- 70: Tilt correction controller
- 71: Line tilt measuring unit
- 72: Detecting-pattern printing controller
- 73: Head tilt measuring unit
- 74: Lens tilt measuring unit
- 75: Sensor position aberration measuring unit
- 78: Head curvature measuring unit
- 79: Image correcting unit
- 81: Reference sheet
- 82: Transparent sheet (detecting sheet)

## Claims

1. An image forming device comprising:
a conveyance unit conveying a lenticular sheet in a secondary scanning direction, the lenticular sheet formed by plural lenticular lenses aligned on a surface of the lenticular sheet in the secondary scanning direction;
plural detecting sensors disposed on a conveyance track of the lenticular sheet, the plural detecting sensors including a first detecting sensor and a second detecting sensor that are disposed on a base line in a primary scanning direction vertical to the secondary scanning direction;
a lens tilt calculating unit calculating a tilt angle of each of the lenticular lenses relative to the base line based on detecting signals of the plural detecting sensors;
a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet;
a storage unit storing a tilt angle in a longitudinal direction of the head relative to the base line; and
a tilt correction controller for adjusting the tilt angle of each of the lenticular lenses and the tilt angle of the head to agree with each other based on the tilt angle of each of the lenticular lenses calculated on the lens tilt calculating unit and the tilt angle of the head stored on the storage unit.

2. The image forming device according to claim 1, further comprising
a holding unit holding the lenticular sheet that is conveyed on the conveyance track through the conveyance unit,
wherein the tilt correction controller rotates the holding unit around an axis vertical to a conveyance surface of the lenticular sheet, so as to change the tilt angle of each lenticular lens.

3. The image forming device according to claim 2, further comprising
a line tilt measuring unit: conveying a reference sheet having an end face intersecting the secondary scanning direction, the reference sheet on which a line parallel to the end face is formed; detecting the line on the reference sheet on the plural detecting sensors while the reference sheet is being held by the holding unit; and calculating a tilt angle of the line on the reference sheet relative to the base line based on the detecting signals of the plural detecting sensors,
wherein the tilt correction controller rotates the holding unit such that the line on the reference sheet becomes parallel to the base line between the first detecting sensor and the second detecting sensor based on the tilt angle of the line on the reference sheet calculated on the line tilt measuring unit.

4. The image forming device according to claim 3, wherein
the plural detecting sensors include a third detecting sensor that is allowed to deviate from the base line between the first detecting sensor and the second detecting sensor,
the image forming device further comprises a sensor position aberration calculating unit calculating position aberration of the third detecting sensor from the base line based on the detecting signals of the plural detecting sensors that have detected the line on the reference sheet,
the storage unit stores the position aberration of the third detecting sensor calculated on the sensor position aberration calculating unit, and
the lens tilt calculating unit corrects the detecting signal of the third detecting sensor based on the position aberration of the third detecting sensor stored on the storage unit, and calculates the tilt angle of each lenticular lens.

5. The image forming device according to claim 4, wherein
the plural viewpoint images are recorded on the lenticular sheet if a peak of the detecting signal of the first detecting sensor is in-phase with a peak of the detecting signal of the second detecting sensor, and if a time difference between the peak of the detecting signals of the first detecting sensor and of the second detecting sensor and a peak of the detecting signal of the third detecting sensor corresponds to the position aberration stored on the storage unit.

6. The image forming device according to any one of claim 1 to claim 5, further comprising;
a detecting-pattern printing controller for conveying a detecting sheet through the conveyance unit, and printing a detecting pattern for detecting the tilt angle of the head relative to the base line on the detecting sheet with the head; and
a head tilt angle measuring unit detecting the detecting pattern on the plural detecting sensors, calculating a tilt angle of the detecting pattern relative to the base line based on the detected signals of the plural detecting sensors, and storing the calculated tilt angle as the tilt angle of the head on the storage unit.

7. The image forming device according to claim 1, further comprising
a head rotating unit rotating the head around an axis vertical to the conveyance surface of the lenticular sheet,
wherein the tilt correction controller rotates the head through the head rotating unit.

8. An image forming device comprising:
a conveyance unit conveying a lenticular sheet in a secondary scanning direction, the lenticular sheet formed by plural lenticular lenses aligned on a surface of the lenticular sheet in the secondary scanning direction;
plural detecting sensors disposed on a conveyance track of the lenticular sheet, and the plural detecting sensors including a first detecting sensor and a second detecting sensor that are disposed on a base line in a primary scanning direction vertical to the secondary scanning direction;
a lens tilt calculating unit calculating a tilt angle of each of the lenticular lenses relative to the base line based on detecting signals of the plural detecting sensors;
a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet;
a storage unit storing a tilt angle of the head in a longitudinal direction of the head relative to the base line;
a holding unit having a bumper against which the lenticular sheet conveyed on the conveyance track through the conveyance unit is pushed, so as to hold the lenticular sheet while the lenticular sheet is being pushed against the bumper; and
a tilt correction controller for adjusting the tilt angle of each lenticular lens and the tilt angle of the head to agree with each other based on the tilt angle of the head stored on the storage unit with the bumper of the holding unit parallel to the base line.

9. The image forming device according to claim 8, further comprising
a line tilt measuring unit: conveying a reference sheet having an end face intersecting the secondary scanning direction, the reference sheet on which a line parallel to the end face is formed; detecting the line on the reference sheet on the plural detecting sensors while the reference sheet is being pushed against the bumper of the holding unit so as to be held by the holding unit; and calculating a tilt angle of the line on the reference sheet relative to the base line based on the detecting signals of the plural detecting sensors,
wherein the tilt correction controller rotates the holding unit such that the line on the reference sheet becomes parallel to the base line between the first detecting sensor and the second detecting sensor based on the tilt angle of the line on the reference sheet calculated on the line tilt measuring unit.

10. The image forming device according to any one of claim 1 to claim 9, further comprising:
a curvature storage unit storing amount of curvature of the head in the longitudinal direction thereof; and
an image correcting unit correcting curvature of the viewpoint images formed on the lenticular sheet due to the curvature of the head based on the amount of curvature stored on the storage unit so as to cancel curvature distortion of the viewpoint images.

11. The image forming device according to claim 10, further comprising:
a detecting-pattern printing controller for conveying a detecting sheet through the conveyance unit, and printing a detecting pattern for detecting the tilt angle of the head relative to the base line on the detecting sheet with the head;
a head tilt angle measuring unit detecting a tilt detecting pattern on the plural detecting sensors, calculating a tilt angle of the detecting pattern relative to the base line based on the detected signals of the plural detecting sensors, and storing the calculated tilt angle as the tilt angle of the head on the storage unit; and
a curvature measuring unit calculating the amount of curvature in the longitudinal direction of the head based on the detecting signals of the plural detecting sensors that have detected the detecting pattern on the detecting sheet, and storing the calculated the amount of curvature on the storage unit.

12. The image forming device according to claim 11, wherein
a detecting sensor for detecting the amount of curvature is disposed in a middle position between the first detecting sensor and the second detecting sensor.

13. The image forming device according to claim 11 or claim 12, wherein
four or more detecting sensors are disposed as the plural detecting sensors.

14. The image forming device according to any one of claim 1 to claim 13, wherein
the plural detecting sensors are arranged in such a manner that at least one distance between two adjacent detecting sensors is different from distances between other two adjacent detecting sensors among the plural detecting sensors.

15. An image forming method used for an image forming device including: a conveyance unit conveying a lenticular sheet in a secondary scanning direction, the lenticular sheet formed by plural lenticular lenses aligned on a surface of the lenticular sheet in the secondary scanning direction; plural detecting sensors disposed on a conveyance track of the lenticular sheet, the plural detecting sensors including a first detecting sensor and a second detecting sensor that are disposed on a base line in a primary scanning direction vertical to the secondary scanning direction; a head disposed on the conveyance track of the lenticular sheet in a longitudinal direction of the lenticular sheet intersecting the secondary scanning direction, the head recording plural viewpoint images on the lenticular sheet by recording plural linear images for each of the plural lenticular lenses on a back surface of the lenticular sheet; and a storage unit,
the image forming method causing the image forming device to execute:
a step of storing a tilt angle of the head in a longitudinal directi on thereof relative to the base line;
a step of calculating a tilt angle of each lenticular lens relative to the base line based on detecting signals of the plural detecting sensors;
a step of setting the tilt angle of the lenticular lens and the tilt angle of the head to agree with each other based on the calculated tilt angle of the lenticular lens and the tilt angle of the head stored on the storage unit; and
a step of recording the plural viewpoint images on a back surface of the lenticular sheet with the head.

16. The image forming method according to claim 15, wherein
the image forming device further includes a holding unit molding the lenticular sheet that is conveyed on the conveyance track through the conveyance unit, and
the image forming method causes the image forming device to change the tilt angle of the lenticular lens relative to the base line by rotating the holding unit around an axis vertical to a conveyance surface of the lenticular sheet.

17. The image forming method according to claim 16, wherein
the image forming method causes the image forming device to execute:
a step of conveying a reference sheet having an end face intersecting the secondary scanning direction, and holding the reference sheet through the holding unit;
a step of detecting the line on the reference sheet on the plural detecting sensors while the reference sheet is being held by the holding unit;
a step of calculating a tilt angle of the line on the reference sheet relative to the base line based on the detecting signals of the plural detecting sensors; and
a step of rotating the holding unit such that the line on the reference sheet becomes parallel to the base line between the first detecting sensor and the second detecting sensor based on the calculated tilt angle of the line on the reference sheet.

18. The image forming method according to claim 17, wherein
the plural detecting sensors include a third detecting sensor that is allowed to deviate from the base line between the first detecting sensor and the second detecting sensor, and
the image forming method causes the image forming device to execute:
a step of calculating position aberration of the third detecting sensor from the base line based on the detecting signals of the plural detecting sensors that have detected the line on the reference sheet, and stores the position aberration on the storage unit; and
a step of correcting a detecting signal of the third detecting sensor based on the position aberration of the third detecting sensor stored on the storage, and calculating the tilt angle of each lenticular lens.

19. The image forming method according to claim 18, wherein
the image forming method causes the image forming device to execute a step of recording the plural viewpoint images on the lenticular sheet if a peak of a detecting signal of the first detecting sensor is in-phase with a peak of the detecting signal of the second detecting sensor, and if a time difference between the peak of the detecting signal of first detecting sensor and of the second detecting sensor and a peak of the detecting signal of the third detecting sensor corresponds to the position aberration.

20. The image forming method according to any one of claim 15 to 19, wherein the image forming method causes the image forming device to execute:
a step of conveying a detecting sheet through the conveyance unit, and printing a detecting pattern for detecting the tilt angle of the head relative to the base line on the detecting sheet with the head;
a step of detecting the detecting pattern on the plural detecting sensors; and
a step of calculating a tilt angle of the detecting pattern relative to the base line based on the detected signals of the plural detecting sensors, and storing the tilt angle as the tilt angle of the head on the storage unit.

21. The image forming method according to any one of claim 15 to 20, wherein the image forming method causes the image forming device to execute:
a step of storing amount of curvature of the head in the longitudinal direction thereof; and
a step of correcting curvature of the viewpoint images formed on the lenticular sheet due to the curvature of the head based on the amount of curvature acquired from the storage unit so as to cancel curvature distortion of the viewpoint images.
